# EUROPÄISCHE PATENTSCHRIFT

(11) **EP 0 664 749 B1**
(45) Veröffentlichungstag und Bekanntmachung des Hinweises auf die Patenterteilung: **20.01.1999**
(21) Anmeldenummer: 94926198.6
(22) Anmeldetag: 16.08.1994
(51) Int. Cl.: B60R 21/16, D03D 1/02

(54) **GASSACK FÜR EIN RÜCKHALTESYSTEM IN FAHRZEUGEN UND GEWEBE ZU SEINER HERSTELLUNG**
AIRBAG FOR A RESTRAINING SYSTEM IN VEHICLES AND FABRIC FOR MANUFACTURING THE SAME
AIRBAG POUR SYSTEME DE RETENUE SITUE DANS UN VEHICULE ET TISSU SERVANT A SA FABRICATION

(30) Priorität: 17.08.1993 DE 4327649
(43) Veröffentlichungstag der Anmeldung: 02.08.1995
(73) Patentinhaber: TRW Occupant Restraint Systems GmbH & Co. KG, 73551 Alfdorf (DE)
(72) Erfinder: ELLERBROK, Norbert, D-73553 Alfdorf (DE)
(74) Vertreter: Degwert, Hartmut, Dipl.-Phys.
(86) Internationale Anmeldenummer: EP9402722
(87) Internationale Veröffentlichungsnummer: WO9505296

(56) Entgegenhaltungen:
- FR-A- 2 091 283
- US-A- 3 937 488

## Beschreibung

Die Erfindung betrifft einen Gassack für ein Rückhaltesystem in Fahrzeugen, mit einer Wandung aus mehreren miteinander vernähten Teilen eines unbeschichteten Gewebes, von denen das dem Fahrzeuginsassen zugewandte Gewebeteil eine wesentlich geringere Gasdurchlässigkeit als wenigstens ein vom Fahrzeuginsassen abgewandtes Gewebeteil aufweist. Ferner betrifft die Erfindung ein Gewebe zur Herstellung des Gassacks. Ein derartiger Gassack ist z.B. aus der Druckschrift US-A-3 937 488 bekannt.

Die mit einem Gassack erzielbare Schutzwirkung hängt insbesondere von seiner Härte im aufgeblasenen Zustand ab. Ein weicher Gassack minimiert das Verletzungsrisiko, solange er nicht bei einem harten Fahrzeugaufprall oder von einem schwergewichtigen Fahrzeuginsassen durchschlagen wird. Da beim Eintauchen des Fahrzeuginsassen in den Gassack dessen Volumen verkleinert wird, nimmt auch der Innenüberdruck zu, wodurch zugleich die Härte des Gassacks anwächst. Dieser erwünschte Effekt wird jedoch bei einem herkömmlichen Gassack großenteils dadurch zunichte gemacht, daß aufgrund des erhöhten Innenüberdrucks der Gasdurchsatz durch die Aoströmöffnungen oder die gasdurchlässigen Wandungsteile des Gassacks zunimmt. Nach herkömmlichen Vorstellungen ist nämlich der Gasdurchsatz durch eine Abströmöffnung oder durch ein gasdurchlässiges Gewebe im wesentlichen eine lineare Funktion des Innenüberdrucks.

Durch die Erfindung wird ein Gassack für ein Rückhaltesystem in Fahrzeugen geschaffen, dessen Härte selbsttätig reguliert wird und innerhalb eines weiten Bereiches von beteiligten Parametern, wie Aufprallintensität, Gewicht des Fahrzeuginsassen oder temperaturabhängige Gasgeneratorleistung, den für eine optimale Schutzwirkung erforderlichen Wert hat. Erreicht wird dieses selbstregulierende Verhalten des Gassacks durch Steuerung der Gasdurchlässigkeit seiner Wandung in Abhängigkeit vom Innenüberdruck. Die Gasdurchlässigkeitskurve, welche den Gasdurchsatz durch die gesamte Wandung des Gassacks als Funktion des Innenüberdrucks angibt, muß stark von herkömmlichen Vorstellungen abweichen, wonach die Gasdurchlässigkeit annähernd linear mit dem Innenüberdruck zunimmt. Tatsächlich muß die Gasdurchlässigkeit nach Erreichen eines Maximums im Bereich von etwa 20 kPa sogar abnehmen. Gemäß der Erfindung muß die Gasdurchlässigkeit der gesamten Wandung des Gassacks bis zu einem Überdruck von etwa 10 kPa mit anwachsendem Druck auf einen Wert zwischen etwa 0,4 und etwa 1,0 m³/s anwachsen. Zwischen Überdruckwerten von etwa 10 kPa und etwa 20 kPa wächst die Gasdurchlässigkeit weiter an, erreicht ein Maximum und nimmt anschließend wieder ab. Oberhalb eines Überdrucks von etwa 20 kPa bis mindestens etwa 40 kPa soll die Gasdurchlässigkeit nicht wesentlich zunehmen, vorzugsweise sogar eine deutlich abnehmende Tendenz aufweisen. Durch diesen Verlauf der Gasdurchlässigkeitskurve ist der Gassack in der Anfangsphase des Überdruckaufbaus relativ weich, so daß bei einem leichten Aufprall das Verletzungsrisiko minimiert wird. Bei hohen Überdruckwerten liegt hingegen ein harter Aufprall vor, beispielsweise bei einem nicht angegurteten Fahrzeuginsassen. Da in diesem Bereich die Gasdurchlässigkeit der Gassackwandung nicht weiter ansteigt, sondern vorzugsweise sogar abnimmt, hat der Gassack die nun erforderliche große Härte.

Gemäß einer vorteilhaften Weiterbildung der Erfindung bestehen alle Gewebeteile der Gassackwandung aus demselben, durch Fadendichte und Filamentgarn bestimmten Gewebetyp. Die Verwendung desselben Gewebetyps für Gewebeteile mit verschiedener Gasdurchlässigkeit ist von großem Vorteil, weil alle Gewebeteile dieselbe Strukturfestigkeit haben und die Nahtverbindungen zwischen den Gewebeteilen unproblematisch sind. Daß für Gewebeteile mit stark unterschiedlichen Gasdurchlässigkeitswerten derselbe Gewebetyp geeignet sein kann, ist eine weitere Erkenntnis der Erfindung. Zum einen wurde gefunden, daß die Gasdurchlässigkeit eines gegebenen Gewebes sehr verschieden sein kann, je nachdem, ob in Richtung der Kettfäden oder in Richtung der Schußfäden eine höhere Spannung auf die Gewebefäden ausgeübt wird. Bei einem allgemein zylinderförmigen Gassack ist allein aufgrund der Geometrie die Spannung in Umfangsrichtung doppelt so groß wie in Axialrichtung. Wenn Kette und Schuß nach Axial- und Umfangsrichtung ausgerichtet werden, stellt sich also zwangsläufig ein Spannungsverhältnis von 1:2 zwischen den Spannungswerten in Kett- und Schußrichtung ein. Für das dem Insassen zugewandte Gewebeteil, also der Mantelteil bei einem allgemein zylinderförmigen Gassack, wird also diejenige Orientierung von Kett- und Schußfäden gewählt, bei der sich die niedrigere Gasdurchlässigkeit einstellt. Für die anderen Gewebeteile, die eine wesentlich größere Gasdurchlässigkeit aufweisen müssen, ist die Orientierung von Kett- und Schußfäden in der Regel beliebig, da aufgrund der Gassackgeometrie ohnehin das Spannungsverhältnis 1:1 vorliegt. Bei einem allgemein zylinderförmigen Gassack sind dies die Seitenteile, und bei einem ballon- oder kissenförmigen Gassack liegt ohnehin in erster Näherung überall das Spannungsverhältnis 1:1 vor.

Zum anderen wurde gefunden, daß die Gasdurchlässigkeit der Wandung eines Gassacks ein ausgeprägtes dynamisches Verhalten zeigt. Gemäß herkömmlicher Technik wird die Gasdurchlässigkeit eines Gassackgewebes bei einer konstanten Druckdifferenz von 500 Pa gemessen. Die Erfindung stützt sich aber auf die weitere Erkenntnis, daß unbeschichtete Gassackgewebe unter dynamischen Bedingungen, die dem Aktivierungsfall des Gassack-Rückhaltesystems nahekommen, eine Gasdurchlässigkeit aufweisen können, die stark von den Werten abweicht, die aufgrund der bei konstanter Druckdifferenz erfolgten Messung erwartet werden. Daher werden bei der Ermittlung der Gasdurchlässigkeit des Gassackgewebes vorzugsweise die dynamischen Bedingungen simuliert, die bei der Aktivierung eines Gassack-Rückhaltesystems vorherrschen. In Abhängigkeit von der durch die Form des aufgeblasenen Gassacks bedingten Spannungsverteilung in den einzelnen Gewebeteilen wird die Orientierung der Kettfäden und der Schußfäden der Gewebeteile am aufgeblasenen Gassack so gewählt, daß für jedes Gewebeteil die vorgegebene Gasdurchlässigkeit bei dem in der Praxis erwarteten Druckdifferenzverlauf eingestellt ist. Unter Verwendung ein und desselben Gewebetyps können so verschiedene Bereiche des Gassacks mit voneinander verschiedenen, gut reproduzierbaren Gasdurchlässigkeitswerten ausgestattet werden.

Bei der dynamischen Untersuchung der Gasdurchlässigkeit von unbeschichteten Gassackgeweben zeigte es sich, daß durch Variation herkömmlicher Webparameter wie Fadenbindung und Ondulation an den Fadenkreuzungspunkten ein Verlauf der Gasdurchlässigkeitskurve erzielt werden kann, der dem idealen Verhalten sehr nahekommt, insbesondere dadurch, daß oberhalb eines Maximalwertes der Gasdurchlässigkeit bei etwa 20 kPa das Gewebe "schließt", sich also diametral anders verhält als nach herkömmlichen Vorstellungen. Durch gezieltes Verändern der genannten Parameter kann ein Gewebe mit dem gewünschten Verhalten der Gasdurchlässigkeit hergestellt werden.

Durch die Erfindung werden ferner zwei Gewebetypen zur Herstellung eines erfindungsgemäßen Gassacks zur Verfügung gestellt. Der erste Gewebetyp, der für den dem Fahrzeuginsassen zugewandten Gewebeteil des Gassacks bestimmt ist und folglich relativ "dicht" sein muß, zeichnet sich dadurch aus, daß seine Gasdurchlässigkeit bis zu einem Überdruck von etwa 20 kPa mit anwachsendem Druck auf einen Maximalwert von weniger als etwa 0,4 m³/s anwächst, anschließend wieder abnimmt und oberhalb eines Überdrucks von etwa 30 kPa nicht mehr wesentlich zunimmt. Der zweite Gewebetyp ist für den oder die vom Fahrzeuginsassen abgewandten Gewebeteil(e) bestimmt und zeichnet sich dadurch aus, daß seine Gasdurchlässigkeit bis zu einem Überdruck von etwa 10 kPa mit anwachsendem Druck auf einen Wert zwischen etwa 0,3 und etwa 0,8 m³/s anwächst, zwischen Überdruckwerten von etwa 10 kPa und etwa 20 kPa weiter anwächst, ein Maximum erreicht und anschließend wieder abnimmt, sowie oberhalb eines Überdrucks von etwa 20 kPa bis mindestens etwa 40 kPa nicht wesentlich zunimmt, vorzugsweise sogar abnimmt. Die gesamte Gasdurchlässigkeit des Gassacks ergibt sich aus der Summe der beiden flächenanteilig gewichteten Gasdurchlässigkeitskurven dieser zwei Gewebetypen.

Weitere Merkmale und Vorteile der Erfindung ergeben sich aus der folgenden Beschreibung unter Bezugnahme auf die beigefügten Zeichnungen. In diesen Zeichnungen zeigen:
- Fig. 1: ein Diagramm, das die Gasdurchlässigkeit eines idealen Gassacks unter dynamischen Bedingungen darstellt;
- Fig. 2: ein entsprechendes Diagramm für einen relativ dichten Gewebetyp;
- Fig. 3: ein entsprechendes Diagramm für einen relativ gasdurchlässigen Gewebetyp;
- Fig. 4a bis d: schematische Darstellungen verschiedener Fadenbindungs- und Ondulationszustände im unbelasteten Zustand und unter Spannung.

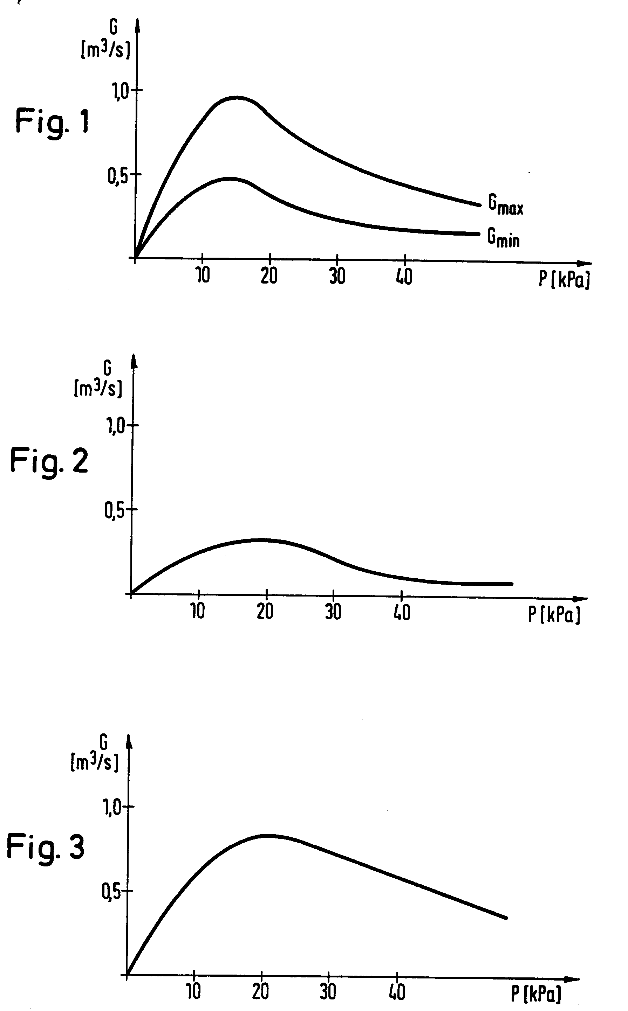

In dem Diagramm nach Fig. 1 ist der gesamte Gasdurchsatz durch die Wandung eines Gassacks in Abhängigkeit vom Überdruck dargestellt. Bei einem idealen Gassack liegt die Kurve der Gasdurchlässigkeit zwischen einer oberen Kurve Gₘₐₓ und einer unteren Kurve Gₘᵢₙ in Fig. 1. Diese beiden Kurven bilden einen Korridor, worin die Gasdurchlässigkeitskurve eines idealen Gassacks liegen sollte. Die in Fig. 1 gezeigten Kurven sind wie folgt zu interpretieren: Bei der Entfaltung des Gassacks wird in seinem Inneren ein Überdruck aufgebaut, der schnell anwächst und bereits nach wenigen Millisekunden zur vollständigen Entfaltung des Gassacks führt. Die sogenannte Füllzeit hängt von der Größe des Gassacks ab und beträgt zwischen etwa 20 und etwa 35 ms. Der Überdruck im Inneren des Gassacks erreicht ein Maximum, wenn der Fahrzeuginsasse in den Gassack eintaucht. Die wirksame Härte des Gassacks wird durch die Gasdurchlässigkeit seiner Wandung in Abhängigkeit vom jeweiligen Überdruck bestimmt. In der Anfangsphase des Überdruckaufbaus sollte der Gassack weich sein, um bei einem leichten Aufprall das Verletzungsrisiko zu minimieren. Bei hohen Überdruckwerten liegt ein harter Aufprall vor, beispielsweise bei einem nicht angegurteten Fahrzeuginsassen. Damit dieser den Gassack nicht durchschlägt, muß der Gassack hart sein. Mit dem in Fig. 1 gezeigten Verlauf der Gasdurchlässigkeitswerte in Abhängigkeit vom Überdruck wird das angestrebte, selbstregelnde Verhalten des Gassacks erreicht. Für den optimalen Verlauf der Gasdurchlässigkeitskurve zwischen den Kurven Gₘₐₓ und Gₘᵢₙ sind mehrere Parameter bestimmend, insbesondere: Fahrzeugtyp, Druckgasgenerator, Größe und Form des Gassacks sowie die herrschende Temperatur.

Es wurde ferner gefunden, daß die ideale Gasdurchlässigkeitskurve des gesamten Gassacks mit einer Gassackwandung aus einem unbeschichteten Textilgewebe erzielt werden kann, was mit herkömmlichem Fachwissen nicht in Einklang gebracht werden kann. Nach herkömmlicher Technik wird die Eignung eines Gewebes für einen Gassack anhand seiner Gasdurchlässigkeit bestimmt, die statisch bei einem fest vorgegebenen Differenzdruck von 500 Pa bestimmt wird. Es wird also erwartet, daß der Gasdurchsatz durch das Gewebe linear von der Druckdifferenz abhängt. Eine linear mit dem Druck zunehmende Gasdurchlässigkeit wäre in dem Diagramm nach Fig. 1 durch eine Gerade darzustellen, die durch den Nullpunkt verläuft. Die ideale Gasdurchlässigkeitskurve, die zwischen den Kurven Gₘₐₓ und Gₘᵢₙ in Fig. 1 verläuft, läßt sich hingegen wie folgt definieren:
a) bis zu einem Überdruck etwa 10 kPa wächst die Gasdurchlässigkeit mit anwachsendem Druck auf einen Wert zwischen etwa 0,4 und etwa 1,0 m³/s an;
b) zwischen den Überdruckwerten von etwa 10 kPa und etwa 20 kPa wächst die Gasdurchlässigkeit weiter an bis zu einem Maximalwert und nimmt anschließend ab;
c) oberhalb eines Überdrucks von etwa 20 kPa in einem Bereich bis mindestens etwa 40 kPa erfolgt keine wesentliche Zunahme der Gasdurchlässigkeit.

Oberhalb eines Überdrucks von 20 kPa und in einem Bereich bis mindestens etwa 40 kPa besteht vorzugsweise eine abnehmende Tendenz der Gasdurchlässigkeit. Man sieht auch, daß die Gasdurchlässigkeitskurve oberhalb eines Überdruckwertes von etwa 20 kPa vorzugsweise einen Wendepunkt durchläuft. Schließlich nimmt die Gasdurchlässigkeit bis zu einem Überdruckwert von 10 kPa vorzugsweise stärker als proportional zu.

Ein unbeschichtetes Textilgewebe, das die geforderte Gasdurchlässigkeit aufweist, kann durch die gezielte Auswahl von herkömmlichen Webparametern geschaffen werden. Wesentlich ist, daß bei der Bestimmung der Gasdurchlässigkeit eines Gewebes dynamisch vorgegangen wird und die Spannungsverhältnisse am aufgeblasenen Gassack berücksichtigt werden.

Da der gesamte Vorgang der Expansion und Kompression des Gassacks innerhalb einer Zeitspanne von etwa 100 bis 150 ms abgeschlossen ist, muß die experimentelle Bestimmung der Gasdurchlässigkeit eines Gewebes mit einem Druckimpuls erfolgen, der innerhalb einer vergleichbaren Zeitspanne die auftretenden Überdruckwerte erreicht.

Da der Gassack vorzugsweise in seinem dem Fahrzeuginsassen zugewandten Bereich eine geringe Gasdurchlässigkeit aufweist, muß der sich aus Fig. 1 ergebende Verlauf der Gasdurchlässigkeitskurve überwiegend durch das Gewebe in den anderen Gassackbereichen erzielt werden. Wenn der Gassack aus verschiedenen Gewebeteilen zusammengesetzt ist, müssen die dem Insassen zugewandten Gewebeteile eine wesentlich geringere Gasdurchlässigkeit als die von ihm abgewandten Gewebeteile aufweisen. Die sich aus Fig. 1 ergebende Gasdurchlässigkeitskurve ist dann die Summe der zwei flächenanteilig gewichteten Gasdurchlässigkeitskurven der verwendeten Gewebeteile. Der dem Fahrzeuginsassen zugewandte Gewebeteil ist vorzugsweise "gasdicht", d.h. seine Gasdurchlässigkeit wächst bei einseitiger Druckbeaufschlagung während einer Dauer von etwa 100 ms mit zunehmendem Druck zumindest oberhalb eines Wertes von etwa 10 kPa und bis mindestens etwa 40 kPa höchstens unwesentlich an; vorzugsweise nimmt sie sogar beträchtlich ab. Unter diesen Voraussetzungen kann ein unbeschichtetes Gewebe verwendet werden, dessen Gasdurchlässigkeit bei statischer Druckbeaufschlagung mit einer Druckdifferenz von 500 PA mehr als 12 l/min·dm² beträgt, z. B. 15 - 18 l/min·dm².

Die Gasdurchlässigkeitskurve eines solchen Gewebetyps ist im Diagramm der Fig. 2 gezeigt. Diese Kurve läßt sich wie folgt beschreiben: Bis zu einem Innenüberdruck von etwa 20 kPa steigt die Gasdurchlässigkeit mit anwachsendem Druck auf einen Maximalwert von weniger als etwa 0,4 m³/s an, anschließend nimmt sie ab, und oberhalb eines Innenüberdruckwertes von etwa 30 kPa nimmt sie nicht mehr wesentlich zu, sondern verbleibt auf einen relativ niedrigen Wert.

Die Gasdurchlässigkeitskurve für den anderen Gewebetyp, der eine vergleichsweise hohe Gasdurchlässigkeit aufweisen soll, ist in Fig. 3 gezeigt. Diese Kurve läßt sich wie folgt beschreiben: Bis zu einem Innenüberdruck von etwa 10 kPa wächst die Gasdurchlässigkeit mit ansteigendem Druck auf einen Wert zwischen etwa 0,3 und etwa 0,8 m³/s an; zwischen Überdruckwerten von etwa 10 kPa und etwa 20 kPa wächst die Gasdurchlässigkeit weiter an, erreicht ein Maximum und nimmt anschließend wieder ab; oberhalb eines Innenüberdrucks von etwa 20 kPa bis mindestens etwa 40 kPa nimmt die Gasdurchlässigkeit nicht wesentlich zu, vorzugsweise sogar ab.

Tendenziell haben beide Gasdurchlässigkeitskurven denselben Verlauf, liegen jedoch auf verschiedenem Niveau.

Um den gewünschten Verlauf der Gasdurchlässigkeitskurve eines unbeschichteten Textilgewebes zu erreichen, werden insbesondere die folgenden Parameter gezielt ausgewählt: Fadendichte, Fadentyp (Polymerisat und Schrumpfverhalten), Gewebebindung, Ondulation und Ausrüstung. Um die Konfektionierung des Gassacks wesentlich zu vereinfachen, wenn er aus verschiedenen Gewebeteilen zusammengesetzt ist, wird trotz des völlig verschiedenen Gasdurchlässigkeitsverhaltens der verschiedenen Gewebeteile stets derselbe, durch Fadendichte und Fadentyp bestimmte Gewebetyp verwendet.

Die wesentlichen Parameter zur Beeinflussung der Gasdurchlässigkeitskurve sind die Fadenbindung und die Ondulation. So kann durch Bindungen mit Fadenflottungen in Kette und Schuß über zwei und mehr Fäden, wobei zur Stabilisierung der textilen Fläche nach jeder Fadenflottung wieder eine Leinwandeinbindung des Fadens erfolgt, die Porengröße an den Fadenkreuzungspunkten des Gewebes und damit die Luftdurchlässigkeit bei gleicher Fadendichte erhöht werden. Unter Spannungsbelastung bei ansteigendem Innenüberdruck nimmt die Porengröße durch die Konstruktionsdehnung des Gewebes zu, wodurch an den flottierenden Fadenkreuzungspunkten mehr Raum für die Verbreiterung der Filamentlage entsteht, was bei weiter ansteigendem Innenüberdruck zu einer abnehmenden Tendenz der Gasdurchlässigkeit führt. Wenn das Gewebe bei allen vorkommenden Spannungsverhältnissen zwischen Kette und Schuß, also 1:1, 2:1 oder 1:2, dasselbe Gasdurchlässigkeitsverhalten aufweisen soll, werden die Bindungen so angelegt, daß in Kettrichtung und Schußrichtung die gleiche Fadenondulation und Fadenabbindung und folglich die gleiche Konstruktionsdehnung vorhanden ist. Die Orientierung von Kett- und Schußfäden in den verschiedenen Gewebeteilen des Gassacks hat dann keinen wesentlichen Einfluß auf die Gasdurchlässigkeit. Für Gewebeteile, die am aufgeblasenen Gassack aufgrund seiner Geometrie ein von 1:1 abweichendes Spannungsverhältnis zwischen Kette und Schuß aufweisen, können hingegen die Fadenbindungen und Ondulation in Kettrichtung und Schußrichtung gezielt variiert werden, so daß dieses Spannungsverhältnis zur Beeinflussung der Gasdurchlässigkeit ausgenutzt wird.

Die Fig. 4a bis 4c veranschaulichen den Effekt eines sich unter zunehmendem Innendruck des Gassacks "schließenden" Gewebes. Fig. 4a zeigt schematisch einen Schnitt durch ein Gewebe mit einer Fadenbindung vom Typ Leinwand ohne Fadenflottungen im unbelasteten Zustand. Die Kettfäden sind mit 10, die Schußfäden mit 12 bezeichnet. Man erkennt die Ondulation der Schußfäden. Unter Zugspannung in Richtung der Schußfäden, wie in Fig. 4b gezeigt, nimmt die Ondulation ab, Kett- und Schußfäden 10, 12 werden gegeneinander gepreßt und dabei abgeflacht, so daß die Porengröße an den Kreuzungspunkten der Fäden abnimmt. Der wirksame Strömungsquerschnitt durch das Gewebe nimmt ab, so daß die Gasdurchlässigkeit vermindert wird.

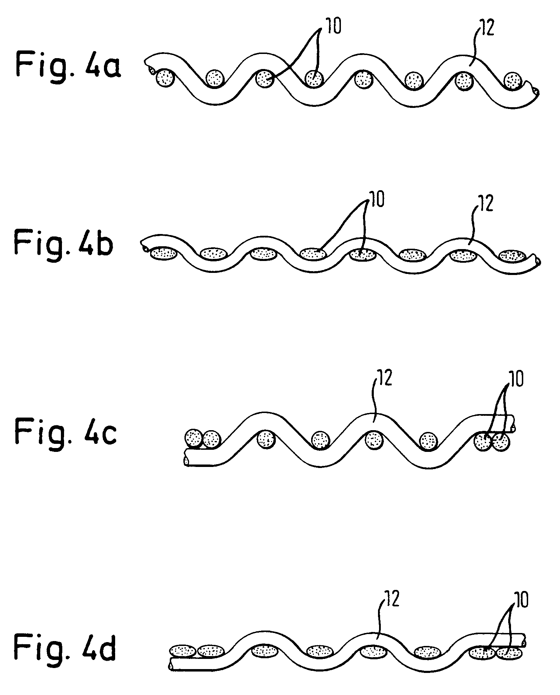

Den gleichen Effekt sieht man in den Fig. 4c und 4d. Fig. 4c zeigt einen Gewebetyp mit Fadenflottungen des Schußfadens 12 über jeweils zwei Kettfäden 10 im unbelasteten Zustand, Fig. 4d denselben Gewebetyp unter Zugspannung in Richtung der Schußfäden 12.

## Patentansprüche

1. Gassack für ein Rückhaltesystem in Fahrzeugen, mit einer Wandung aus mehreren miteinander vernähten Teilen eines unbeschichteten Gewebes, von denen das dem Fahrzeuginsassen zugewandte Gewebeteil eine wesentlich geringere Gasdurchlässigkeit als wenigstens ein vom Fahrzeuginsassen abgewandtes Gewebeteil aufweist, dadurch gekennzeichnet, daß die Gasdurchlässigkeit der gesamten Wandung
a) bis zu einem Überdruck von etwa 10 kPa mit anwachsendem Druck auf einen Wert zwischen etwa 0,4 und etwa 1,0 m³/s anwächst,
b) zwischen Überdruckwerten von etwa 10 kPa und etwa 20 kPa weiter anwächst, ein Maximum erreicht und anschließend wieder abnimmt,
c) oberhalb eines Überdrucks von etwa 20 kPa bis mindestens etwa 40 kPa nicht wesentlich zunimmt.

2. Gasack nach Anspruch 1, dadurch gekennzeichnet, daß die Gasdurchlässigkeit der Wandung oberhalb eines Überdrucks von 20 kPa in einem Bereich bis mindestens etwa 40 kPa eine abnehmende Tendenz aufweist.

3. Gassack nach Anspruch 2, dadurch gekennzeichnet, daß die Kurve der Gasdurchlässigkeit in Abhängigkeit vom Innenüberdruck oberhalb eines Wertes von 20 kPa einen Wendepunkt durchläuft.

4. Gassack nach einem der vorstehenden Ansprüche, dadurch gekennzeichnet, daß alle Gewebeteile aus demselben, durch Fadendichte und Filamentgarn bestimmten Gewebetyp bestehen.

5. Gewebe zur Verwendung als dem Fahrzeuginsassen zugewandtes Gewebeteil in einem Gassack nach einem der Ansprüche 1 bis 4, dadurch gekennzeichnet, daß seine Gasdurchlässigkeit bis zu einem Überdruck von etwa 20 kPa mit anwachsendem Druck auf einen Maximalwert von weniger als etwa 0,4 m³/s anwächst, anschließend wieder abnimmt und oberhalb eines Überdrucks von etwa 30 kPa nicht mehr wesentlich zunimmt.

6. Gewebe nach Anspruch 5, dadurch gekennzeichnet, daß seine Kurve der Gasdurchlässigkeit in Abhängigkeit vom Innenüberdruck oberhalb eines Wertes von 20 kPa einen Wendepunkt durchläuft.

7. Gewebe zur Verwendung als vom Fahrzeuginsassen abgewandtes Gewebeteil in einem Gassack nach einem der Ansprüche 1 bis 4, dadurch gekennzeichnet, daß seine Gasdurchlässigkeit
a) bis zu einem Überdruck von etwa 10 kPa mit anwachsendem Druck auf einen Wert zwischen etwa 0,3 und etwa 0,8 m³/s anwächst,
b) zwischen Überdruckwerten von etwa 10 kPa und etwa 20 kPa weiter anwächst, ein Maximum erreicht und anschließend wieder abnimmt,
c) oberhalb eines Überdrucks von etwa 20 kPa bis mindestens etwa 40 kPa nicht wesentlich zunimmt.

8. Gewebe nach Anspruch 7, dadurch gekennzeichnet, daß seine Gasdurchlässigkeit oberhalb eines Überdrucks von 20 kPa in einem Bereich bis mindestens etwa 40 kPa eine abnehmende Tendenz aufweist.

9. Gewebe nach einem der Ansprüche 5 bis 8, dadurch gekennzeichnet, daß es in Kettrichtung und in Schußrichtung die gleiche Ondulation und die gleiche Abbindung aufweist.

10. Gewebe nach einem der Ansprüche 5 bis 9, dadurch gekennzeichnet, daß es Fadenflottungen in Kette und Schuß über mindestens zwei Fäden aufweist und nach jeder Fadenflottung wieder eine Leinwandeinbindung erfolgt.

## Claims

1. A gas bag for a restraint system in a vehicle, having a wall comprising a plurality of sewn together parts of uncoated fabric, of which the fabric part facing the vehicle occupant possesses a substantially lower permeability to gas than at least one fabric part facing away from the vehicle occupant, characterized in that the gas permeability of the overall wall
a) increases to a value between approximately 0.4 and approximately 1.0 m³/s with a pressure increasing up to a gage pressure of approximately 10 kPa,
b) between gage pressure levels of approximately 10 kPa and approximately 20 kPa further increases, reaches a maximum and then decreases again, and
c) above a gage pressure value of approximately 20 kPa to at least approximately 40 kPa does not substantially increase.

2. The gas bag as claimed in claim 1, characterized in that above a gage pressure of 20 kPa the gas permeability of the wall has a decreasing tendency in a range as far as at least approximately 40 kPa.

3. The gas bag as claimed in claim 2, characterized in that the gas permeability versus internal gage pressure curve runs through a point of inflection above a value of 20 kPa.

4. The gas bag as claimed in any one of the preceding claims, characterized in that all fabric parts consist of a fabric which is identical as regards fiber density and filament yarn.

5. A fabric for use as a fabric part, facing the vehicle occupant, in a gas bag as claimed in any one of claims 1 to 4, characterized in that its gas permeability increases up to a maximum value of less than approximately 0.4 m³/s up to a gage pressure of approximately 20 kPa, under increasing pressure, then decreases again and above a gage pressure of approximately 30 kPa does not substantially increase further.

6. The fabric as claimed in claim 5, characterized in that its gas permeability versus internal gage pressure curve runs through a point of inflection above a value of 20 kPa.

7. A fabric for use as a fabric part, facing away from the vehicle occupant, in a gas bag as claimed in any one of claims 1 to 4, characterized in that its gas permeability
a) increases to a value between approximately 0.3 and approximately 0.8 m³/s with pressure increasing up to a gage pressure of approximately 10 kPa,
b) between gage pressure levels of approximately 10 kPa and approximately 20 kPa further increases, reaches a maximum and then decreases again, and
c) above a gage pressure value of approximately 20 kPa to at least approximately 40 kPa does not substantially increase.

8. The fabric as claimed in claim 7, characterized in that above a gage pressure of 20 kPa its gas permeability has a decreasing tendency in a range as far as at least approximately 40 kPa.

9. The fabric as claimed in any one of claims 5 to 8, characterized in that it possesses the same undulation and the same fabric construction in the warp and in the weft directions.

10. The fabric as claimed in any one of claims 5 to 9, characterized by warp and weft floats extending over at least two threads, each such float being followed by plain weave.

## Revendications

1. Coussin gonflable de sécurité pour un système de retenue dans des véhicules, avec une paroi en plusieurs parties, Cousues les unes aux autres d'un tissu brut, dont la partie tournée vers les passagers du véhicule présente une perméabilité aux gaz sensiblement plus faible qu'au moins une partie tournée à l'opposé des passagers du véhicule, coussin gonflable caractérisé en ce que la perméabilité aux gaz de toute la paroi
a)croît jusqu'à une surpression d'environ 10 kPa avec une pression croissant jusqu'à une valeur comprise entre environ 0,4 et environ 1,0 m³/s,
b)croît davantage entre des valeurs de surpression d'environ 10 kPa et environ 20 kPa, atteint un maximum et décroît ensuite à nouveau,
c)ne croît pas sensiblement au-dessus d'une surpression d'environ 20 kPa juqu'à au moins environ 40 kPa.

2. Coussin gonflable de sécurité selon la revendication 1, caractérisé en ce que la perméabilité aux gaz de la paroi présente une tendance à décroître au-dessus d'une surpression de 20 kPa dans une zone allant jusqu'à au moins environ 40 kPa.

3. Coussin gonflable de sécurité selon la revendication 2, caractérisé en ce que la courbe de la perméabilité aux gaz passe par un point d'inflexion en fonction de la surpression intérieure au-dessus d'une valeur de 20 kPa

4. Coussin gonflable de sécurité selon l'une des revendications précédentes, caractérisé en ce que toutes les parties du tissu consistent en le même type de tissu déterminé par la densité des fils et le fil continu.

5. Tissu à utiliser comme partie tournée vers le passager d'une voiture dans un coussin gonflable selon l'une des revendications 1 à 4, caractérisé en ce que sa perméabilité aux gaz croit jusqu'à une surpresion d'environ 20 kPa avec une pression croissant jusqu'à une valeur maximale de moins de 0,4 m³/s, ensuite décroit à nouveau et ne croît plus sensiblement au-dessus d'une surpression d'environ 30 kPa.

6. Tissu selon la revendication 5, caractérisé en ce que sa courbe de perméabilité aux gaz passe par un point d'inflexion en fonction de la surpression intérieure au-dessus d'une valeur de 20 kPa.

7. Tissu à utiliser comme partie tournée à l'opposé du passager d'un véhicule dans un coussin gonflable selon l'une des revendications 1 à 4, caractérisé en ce que sa perméabilité aux gaz
a)croit jusqu'à une surpresion d'environ 10 kPa avec une pression croissant jusqu'à une valeur comprise entre 0,3 et environ 0,8 m³/s,
b)croît davantage entre des valeurs de surpression d'environ 10 kPa et environ 20 kPa, atteint une valeur maximale et ensuite décroît à nouveau,
c) n'augmente pas sensiblement au-dessus d'une surpresion d'environ 20 kPa jusqu'à au moins environ 40 kPa.

8. Tissu selon la revendication 7, caractérisé en ce que sa perméabilité aux gaz présente une tendance à décroître au-dessus d'une surpression de 20 kPa dans une zone allant jusqu'à au moins environ 40 kPa.

9. Tissu selon l'une des revendications 5 à 8, caractérisé en ce qu'il présente dans le sens de la chaîne et dans le sens de la trame la même ondulation et la même texture.

10. Tissu selon l'une des revendications 5 à 9, caractérisé en ce qu'il présente des flottages en chaîne et en trame sur au moins deux fils et que l'on a après chaque flottage à nouveau une armure unie.
